# EUROPEAN PATENT SPECIFICATION

(11) **EP 4 085 216 B1**
(45) Date of publication and mention of the grant of the patent: **05.02.2025**
(21) Application number: 20842884.7
(22) Date of filing: 22.12.2020
(51) Int. Cl.: F17C 5/06

(54) **STATION AND METHOD FOR FILLING TANKS OF HYDROGEN-FUELLED VEHICLES**
STATION UND VERFAHREN ZUM BEFÜLLEN DER TANKS VON WASSERSTOFFBETRIEBENEN FAHRZEUGEN
STATION ET PROCÉDÉ PERMETTANT DE REMPLIR DES RÉSERVOIRS DE VÉHICULES ALIMENTÉS À L'HYDROGÈNE

(30) Priority: 31.12.2019 US 201962956064 P; 31.12.2019 US 201962956067 P
(43) Date of publication of application: 09.11.2022
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: FAIRY, Vincent, Houston, TX 77007 (US)
(74) Representative: Air Liquide
(86) International application number: PCT/US2020/066740
(87) International publication number: WO 2021/138169

(56) References cited:
- EP-A2- 2 837 873
- DE-A1- 102008 060 127
- JP-A- 2015 158 225
- US-A1- 2010 005 812
- US-A1- 2018 306 381
- US-A1- 2018 346 313
- US-A1- 2019 331 298

## Description

### Background

### Field of the Invention

The invention relates to a device for filling pressurized gas tanks.

More particularly, the invention relates to a device for filling the tanks of fuel cell electric vehicles (FCEV), the device comprising a liquefied gas source, a transfer circuit in downstream fluid communication with the liquefied gas source and comprising at least one downstream end adapted and configured to be removably connected to a vehicle hydrogen tank to be filled.

### Related Art

Hydrogen gas refuelling stations using liquid hydrogen sources are known. These known devices make it possible to use refrigeration from the liquid hydrogen to produce pre-cooled pressurized hydrogen gas for rapid filling without experiencing an excessive increase in the temperature of the gas in the tank during filling.

For example, Daney, et al. proposed a conceptual refilling station that uses a vaporizer for providing ambient temperature, high pressure gaseous hydrogen that is subsequently cooled prior to being fed to the vehicle tank. Daney, et al., "Hydrogen-fuelled vehicle fuelling station", Advances in Cryogenic Engineering, vol 41, 1996.

Another such station implemented at an urban bus refilling station utilizes a vaporizer that transfers heat from the ambient air to the pumped flow of liquid hydrogen to provide a flow of high pressure, gaseous hydrogen to the vehicle tank. Raman, et al. "A rapid fill hydrogen fuel station for fuel cell buses", 12th World Energy conference Hydrogen energy Progress 2, pp1629-1642.

At atmospheric pressure, the boiling point of hydrogen is -252.8°C. Because the station disclosed in Raman, et al. uses a vaporizer that exchanges heat between the liquid hydrogen and ambient air, the skin temperature of the ambient air vaporizer is exceedingly low. As a result, water vapor from the ambient air condenses and freezes on surfaces of the ambient air vaporizer. Also air around the ambient air vaporizer condenses and drips on the equipment below. This creates a risk for the equipment below. Equipment may become thermally embrittled, especially equipment that is made of carbon steel, and plates may crack, structural beams may fail, and pipes may burst. Since oxygen will condense at a higher temperature than nitrogen, an oxygen enriched atmosphere may be created. There are of course many known risks presented by an oxygen-rich atmosphere. Furthermore, the condensing air exacerbates the cryogenic cloud around the equipment.

When the depth of the frozen water on the surface of the ambient air vaporizer reaches an unsatisfactory depth, thereby decreasing effective heat transfer, or even results in bridging in between adjacent vanes of the ambient air vaporizer, such a vaporizer must be defrosted before further use is continued. To solve this problem, two ambient air vaporizers may be used in alternating fashion so that while one is being defrosted, the other is used to vaporize the liquid hydrogen. While this solves the problem, it can unsatisfactorily increase capital costs because of the necessity of having two ambient air vaporizers for each filling circuit. For hydrogen filling stations located in areas where the real estate is costly and/or for hydrogen filling stations co-located at a retail gasoline station where the space for the station is leased from the retail gasoline station, capital expenses are also increased because the necessity of having two vaporizers doubles the footprint or space taken up by the liquid vaporization portion of the station.

Because the skin temperature of the ambient air vaporizer is so low, water vapour in the ambient air also condenses in regions surrounding the vaporizer, creating fogging conditions.

While fogging can be a nuisance for refilling stations isolated from the public, such as in an industrial area ordinarily far from consumers, fogging is a much more serious problem for more conspicuous refilling stations, such as at retail hydrogen refilling stations, open demonstration refilling stations, and hydrogen filling stations co-located with retail gasoline stations. This is because members of the public will view the fogging emanating from a hydrogen refilling station and incorrectly conclude that either a dangerous leak of hydrogen has occurred at the station or even that a fire has broken out at the station. Erroneous reports of disastrous leaks or dangerous fires to emergency responders will therefore require that the station be subjected to an emergency stop followed by a thorough safety assessment before the station may be declared safe for operation. For this reason, the use of ambient vaporizers can seriously impede the development of hydrogen refilling stations sourced by on-site tanks of liquid hydrogen and located in conspicuous areas viewable by the public,

US 2019/331298 A1 and JP 2015 158225 A disclose liquefied hydrogen dispensing systems.

### Summary of the Invention

An aim of the invention is to overcome all or some of the prior art disadvantages stated above.

There is disclosed a hydrogen refilling station in accordance with independent claim 1 and a method of filling a tank in accordance with independent claim 10.

### Brief Description of the Figures

Other characteristic features and advantages will emerge upon reading the following description, with reference to the figures in which:
FIG 1 is a schematic view of an embodiment of the inventive station and method of the invention.
FIG 2 is a schematic view of a variant of the station and method of FIG 1.
FIG 3 is a schematic view of a variant of the station and method of FIG 1.
FIG 4 is a schematic view of a combination of features of the stations and methods of FIGS 2 and 3.
FIG 5 is a schematic view of a variant of the station and method of FIG 4.
FIG 6 is a schematic view of a variant of the station and method of FIG 5.

### Legend

liquid hydrogen source 1
filling circuit 2
first heat exchanger 3
heat transfer fluid circuit 4
pressure control valve 5
vehicle 6
optional chiller 7
pressure sensor 9
shut-off valve 10
temperature sensor 11
second heat exchanger 15
heat transfer fluid circuit primary line 16
heat transfer fluid circuit bypass line 17
blower 19
three-way control valve 21
heat transfer fluid reservoir 23
heat transfer fluid pump 25
temperature sensor 27
temperature sensor 29
liquid hydrogen pump 31
valve 33
buffer container 35
leg 37
filling circuit primary line 39
filling circuit bypass line 41
combination point 42
temperature control valve 43
temperature control valve 45
shut-off valve 46
shut-off valve 48
shut-off valve 50

### Detailed Description of the Invention

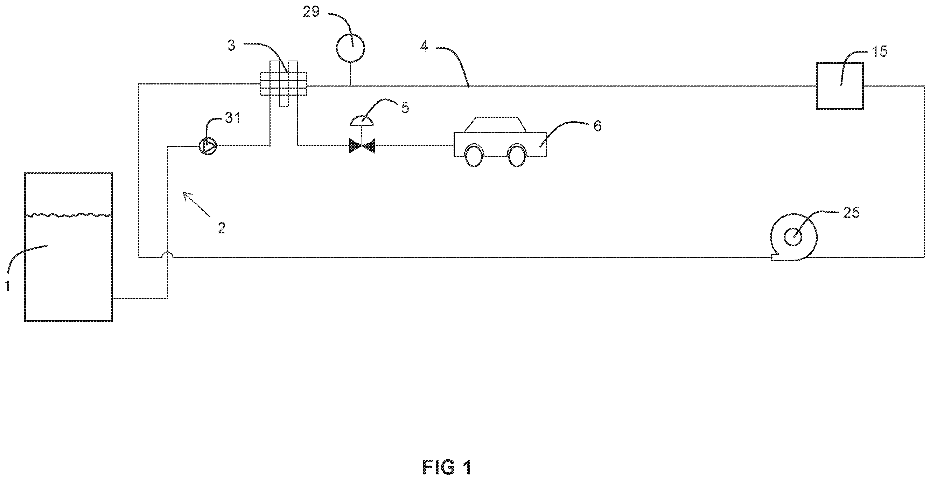

As best shown in FIG 1, liquid hydrogen from a liquid hydrogen source 1 is fed to a filling circuit 2, via an upstream end thereof, that includes a first heat exchanger 3, a pressure control valve 5, a second heat exchanger 15. The downstream end of the filling circuit 2 is removably connected to a tank of a hydrogen fuel cell electric vehicle (FCEV) 6. Heat transfer fluid flows in a heat transfer fluid circuit 4 that includes a heat transfer fluid pump 25, a temperature sensor 27, and a liquid hydrogen pump 31.

The source optionally includes a pressure building circuit for building pressure in a headspace of the source by controlling amounts of liquid hydrogen from the source to exit the source and enter into a line in thermal connection with ambient air, using a flow control valve. The liquid hydrogen vaporizes in the line and is directed into the headspace. A pressure sensor measures a pressure inside the headspace. A controller is used to actuate the flow control valve based upon the measured headspace pressure so as to reach a desired pressure in the headspace.

The liquid hydrogen pump 31 is used to feed and pressurize the liquid hydrogen from the source and into the filling circuit. The use of a liquid hydrogen pump 31 allows the liquid hydrogen to be pumped to the supercritical pressures that are desired for high pressure fills of the tanks of the hydrogen-fuelled vehicle 6. For example, liquid hydrogen stored in the source 1 at a pressure of around 50 bar may be easily pumped to a pressure of 900 bar or even higher. The properties and features of the particular liquid hydrogen pump 31 employed are ordinarily driven by the desired maximum pressure to be provided to the tank of the FCEV 6 and the desired filling capacity of the refilling station. Preferably, each liquid hydrogen pump 31 is characterized by the following operating conditions: a net positive suction head of 2-5 psi (0,138bar - 0,345bar), a nominal flow capacity of 45 kg/h, a 100 psi (6,895bar) par liquid hydrogen suction pressure, and a maximum discharge pressure of about 15,000 psi (1034,2bar).

Liquid hydrogen fed into the filling circuit 2 from the source 1 is vaporized at the first heat exchanger 3 to provide pressurized, gaseous hydrogen for filling the tank of the FCEV 6. The first heat exchanger 3 exchanges heat between the heat transfer fluid flowing in the heat transfer fluid circuit 4 and the liquid hydrogen flowing in the filling circuit 2, thereby vaporizing the liquid hydrogen (yielding cold hydrogen in supercritical fluid state) and cooling the heat transfer fluid. The vaporized liquid hydrogen constitutes the pressurized, gaseous hydrogen used to filling the tank of the hydrogen-fuelled vehicle 6. Either a driver/customer of the FCEV 6 or an operator of the refilling station may access the nozzle (at the downstream end of the filling circuit 2) conveniently located at an interface typically found at a standard gasoline station (i.e., a gas pump) which includes a display of the price of the hydrogen, the quantity of hydrogen delivered, and a start/stop button.

The cooled heat transfer fluid is warmed at the second heat exchanger 15 and pumped back to the first heat exchanger 3 using the heat transfer fluid pump 25. The second heat exchanger 15 may be an ambient air vaporizer in which the cooled heat transfer fluid is warmed with the heat from the ambient air blown onto the ambient air vaporizer with the blower. Optionally, the second heat exchanger may be an electric heater.

While any known heat transfer fluid that is in the liquid phase at nominal pressures down to at least -135°C, a non-limiting and particularly suitable example of one is available from Eastman under the brand name Therminol VLT^{®}. Therminol VLT^{®} is a mixture of methylcyclohexane and trimethylpentane and has a reported liquid heat capacity ranging from 1.29 kJ/(kg·K) at -135°C to 2.04 kJ/(kg. K) at 40°C.

The temperature of the heat transfer fluid may be controlled as follows. A controller (not illustrated) controls the speed of the heat transfer fluid pump 25 (such as by increasing or decreasing the speed of a variable frequency drive of the pump 25) based upon the temperature of the heat transfer fluid sensed by temperature sensor 29. If the temperature of the heat transfer fluid just upstream of the first heat exchanger 3 is unsatisfactorily high, it will impair the ability of the heat transfer fluid to warm the liquid hydrogen flowing through the first heat exchanger 3. On the other hand, if the temperature of the heat transfer fluid is too low, it may become too viscous or even frozen. The controller is typically a computer or programmable logic controller. More specifically, the temperature of the heat transfer fluid downstream of the first heat exchanger may be controlled within a temperature range or according to a temperature set point.

Inside the first exchanger 3, the flow of liquid hydrogen is surrounded by the flow of heat transfer fluid. This prevents an exterior skin temperature of the first exchanger 3 from reaching the exceedingly cold temperatures experienced by ambient air vaporizers of conventional liquid hydrogen-source hydrogen filling stations. Thus, condensation of water vapor upon the first heat exchanger 3 and consequent frosting (and the associated problems of defrosting in the prior art as discussed above) is avoided. Also, condensation of water vapor in regions surrounding the first exchanger 3 (and the associated problems of fogging in the prior art as discussed above) is avoided. Typically, the configuration of the first heat exchanger 3 is tube-in-tube where the liquid hydrogen flows through the inner tube and the heat transfer fluid flows in the outer tube. For pressures of about 900 bar, a tube in tube heat exchanger is less complex and less costly than a shell and tube heat exchanger. The first heat exchanger may instead be a shell and tube heat exchanger in which the tube fluid is liquid hydrogen and the shell fluid is the heat transfer fluid. Types of heat exchangers other than the pipe-in-pipe or shell and tube configurations may be used for the first heat exchanger 3 may be used with the invention so long as the liquid hydrogen is surrounded by heat transfer fluid and/or the skin temperature of an exterior of the first heat exchanger 3 does not reach the exceedingly low temperatures of conventional ambient air vaporizers and fogging and frosting are avoided. Portions of the filling circuit upstream of the first heat exchanger may be vacuum-jacketed to prevent the frosting and fogging problems.

The pressure of the hydrogen used to fill the tank of the FCEV 6 may be controlled with a pressure control valve 5. While the particular manner in which the tank is filled is not limited, typically the tank is filled according to a standard filling scheme such as the Society of Automotive Engineers (SAE) standard J2601. The pressure control valve 5

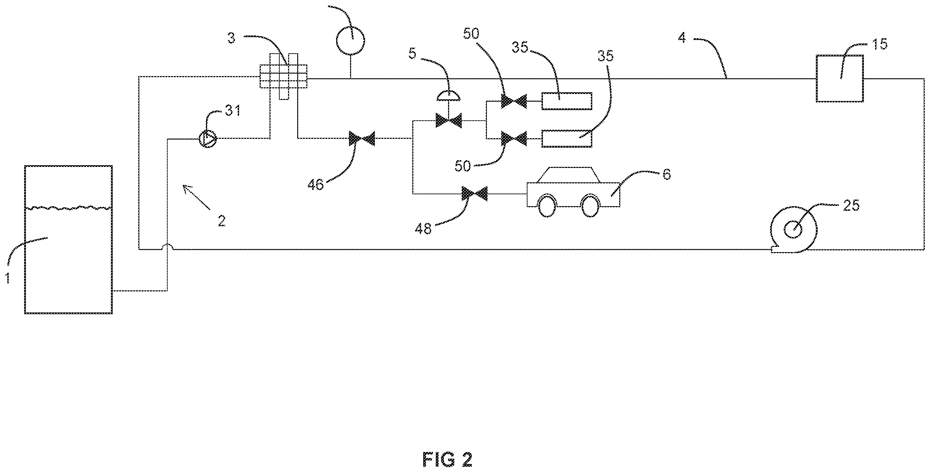

As best illustrated in FIG 2, the hydrogen filling station may also include one or more buffer containers 35 for containing high pressure hydrogen, downstream of the first heat exchanger. Each of the buffer containers may be provided with a pressure building circuit in order to maintain a desired pressure within. The vaporized hydrogen is fed to the buffer containers via a leg 37 appending from the filling circuit 2. The pressure control valve 5 may be used to fill the tank of the hydrogen-fuelled vehicle using a filling algorithm as discussed above. As in FIG 1, the liquid hydrogen is pumped to high pressure by liquid hydrogen pump 31 and heated by the heat transfer fluid at the first heat exchanger 3. Shut-off valve 48 is closed, shut-off valve 46 is open, and one or more of the shut-off valves 50 are open. Instead of being fed to the FCEV directly, the cold supercritical hydrogen is used to fill one more of the buffer containers 35. Optionally, one of the buffer containers 35 is at medium pressure while another is at high pressure. By selective opening or closing of the shut-off valves 50, the buffer container 35 at high pressure may be filled first and the buffer container 35 at medium pressure filled second. Unless one or more of the buffer containers 35 is at an undesirably low pressure, the liquid hydrogen pump 31 need not be continuously run. If the buffer containers 35 are full, the tank of the FCEV 6 may be filled with hydrogen stored in the buffer containers 35 in a cascade fill in which the buffer container 35 at medium pressure is pressure-equalized with the tank of the FCEV 6 and subsequently the buffer container 35 at high pressure is pressure-equalized with the tank as is known in the art.

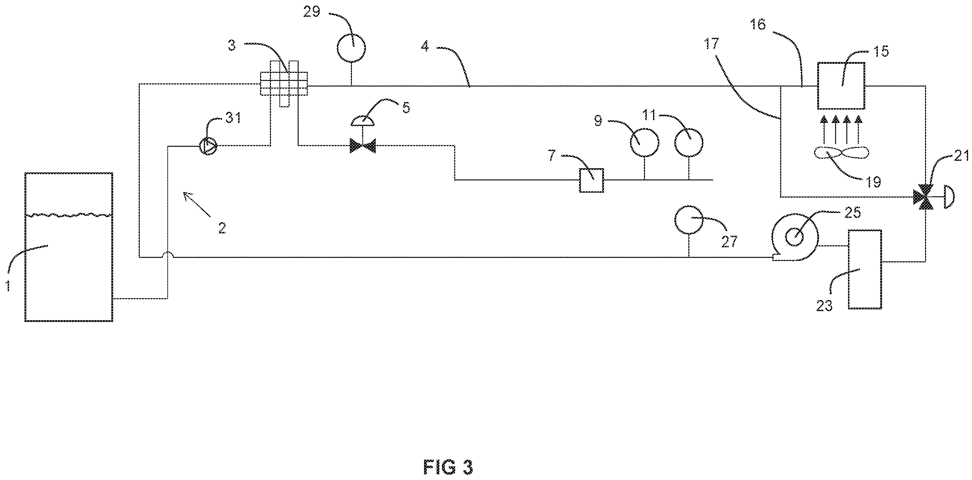

As best shown in FIG 3, the second heat exchanger 15 may be an ambient air vaporizer, the filling circuit 2 may also include an optional chiller 7 and pressure and temperature sensors 9, 11, and the heat transfer fluid circuit 4 may include a heat transfer fluid reservoir 23 and a temperature sensor 27. The tank of an FCEV may be filled using the pressure control valve 5 as described above, based upon the pressure and temperature sensed by pressure and temperature sensors 9, 11. The heat transfer fluid circuit 4 is provided with a primary line 16 in which the second heat exchanger 15 is disposed. The cooled heat transfer fluid is warmed with the heat from the ambient air blown onto the second heat exchanger 15 with a blower 19. Optionally, there is also a bypass line 17 that branches off of the primary line 16 such that a portion of the cooled heat transfer fluid is not warmed at the second heat exchanger 15. In such an optional case, the warmed heat transfer fluid in the primary line 16 is combined with the non-warmed heat transfer fluid in the bypass line 17 using a three-way control valve 21. Because the ambient air temperature blown by the blower 19 will vary with the time of year, the three-way control valve 21 may be controlled according to a control scheme which varies by the season. For example, during the winter in the northern hemisphere, the entirety of the flow of the heat transfer fluid may be fed through the primary line 16 and be heated at the second heat exchanger 15, whereas during the summer, a portion or all of the flow of the heat transfer fluid may be fed through the bypass line 17 in order to yield a colder heat transfer fluid for storage in a heat transfer fluid reservoir 23. This is helpful during especially hot weather in the summer when heat leaks impair the ability to maintain the heat transfer fluid below a maximum predetermined temperature.

The temperature of the combined flow of heat transfer fluid from the three-way control valve 21 may alternatively be controlled in the following manner. A controller (which may be the same as or different from the controller used to control the temperature of the heat transfer fluid downstream of the first heat exchanger 3) controls actuation of the three-way control valve to achieve a ratio of the flow of warmed heat transfer fluid in the primary line and non-warmed heat transfer fluid in the bypass line based upon the temperature measured by the temperature sensor of the heat transfer circuit.

The pressure and temperature sensors 9, 11 may be used to input a pressure and temperature of the hydrogen delivered to the FCEV tank as variables into a filling algorithm as described above. In particular, the filing algorithm is in compliance with SAE standard J2601.

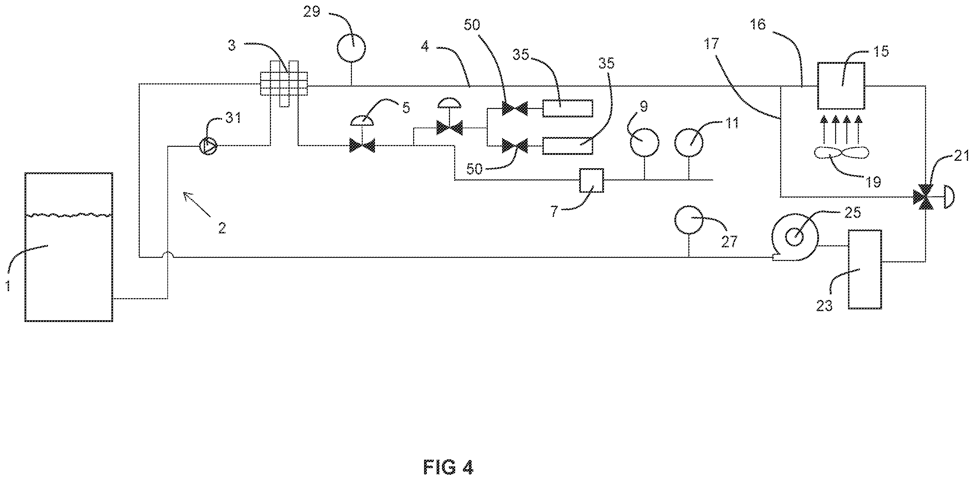

As best in shown in FIG 4, the features of the embodiments of FIGS 2 and 3 may be combined.

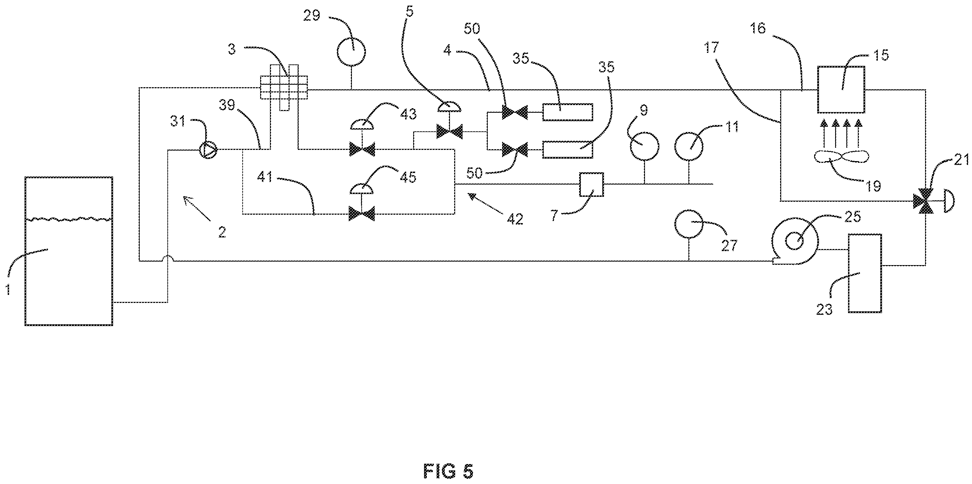

As best illustrated in FIG 5, the filling circuit includes a primary line 39 and a bypass line 41 that branches off of the primary line. The portion of the liquid hydrogen fed to the primary line 39 is vaporized at the first heat exchanger 3 while the portion of the liquid hydrogen fed to the bypass line 41 is not. The two flows of hydrogen are combined at a point 42 downstream of the first heat exchanger 3 to provide the pressurized, gaseous hydrogen. The temperature of the pressurized, gaseous hydrogen may be controlled by controlling the flows of liquid hydrogen into the primary and bypass lines 39, 41 with temperature control valves 43, 45. The temperature control valves 43, 45 may be controlled with a controller (not shown but examples include a computer or a programmable logic controller which may be the same as or different from controller(s) that controls operation of the three-way control valve 21 and/or the liquid hydrogen pump variable frequency drive) based upon the temperature measured by the temperature sensor 11. The skilled artisan will recognize that, when the temperature sensed by the temperature sensor is too low (high), the flow of liquid hydrogen to the primary line 39 may be increased (decreased) and the flow of liquid hydrogen to the bypass line 41 may be decreased (increased) by a corresponding amount. Thus, control of the temperature of the pressurized, gaseous hydrogen may be performed without the optional chiller 7 or the optional chiller 7 may provide supplemental refrigeration only. In this embodiment, the flow of gaseous hydrogen to the FCEV tank is controlled by pressure control valve 5, optionally based upon the pressure and temperature sensed by the pressure and temperature sensors 9, 11 as explained above.
If the FCEV tank is not being filled with hydrogen from the buffer containers 35, shut-off valves 50 are closed and the two flows of hydrogen are combined at a point 42 downstream of the first heat exchanger 3 to provide the pressurized, gaseous hydrogen for filling the FCEV tank. If one of the buffer containers 35 is being used to fill the FCEV tank, one of the shut-off valves 50 is closed, one of the shut-off valves 50 is open and a flow of hydrogen from one of the buffer containers 35 is combined with a flow of liquid hydrogen from the bypass line 41 at the point 42 downstream of the first heat exchanger 3. During such a fill, the pump 31 may keep running or optionally it may be turned off. Regardless of whether the vaporized hydrogen is obtained directly from the primary line 39 or from one of the buffer containers 35, the temperature of the pressurized, gaseous hydrogen may be controlled by controlling the flows of liquid hydrogen in the primary and bypass lines with temperature control valves 43, 45. The temperature control valves 43, 45 may be controlled with a controller (not shown but examples include a computer or a programmable logic controller which may be the same as or different from controller 29) based upon the temperature measured by the temperature sensor. The skilled artisan will recognize that, when the temperature sensed by the temperature sensor is too low (high), the flow of liquid hydrogen to the primary line 39 may be increased (decreased) and the flow of liquid hydrogen to the bypass line 41 may be decreased (increased) by a corresponding amount. Thus, control of the temperature of the pressurized, gaseous hydrogen may be performed without the optional chiller or the optional chiller may provide supplemental refrigeration only. In this embodiment, the flow of gaseous hydrogen to the FCEV tank is controlled by pressure control valve based upon the pressure sensed by the pressure sensor.

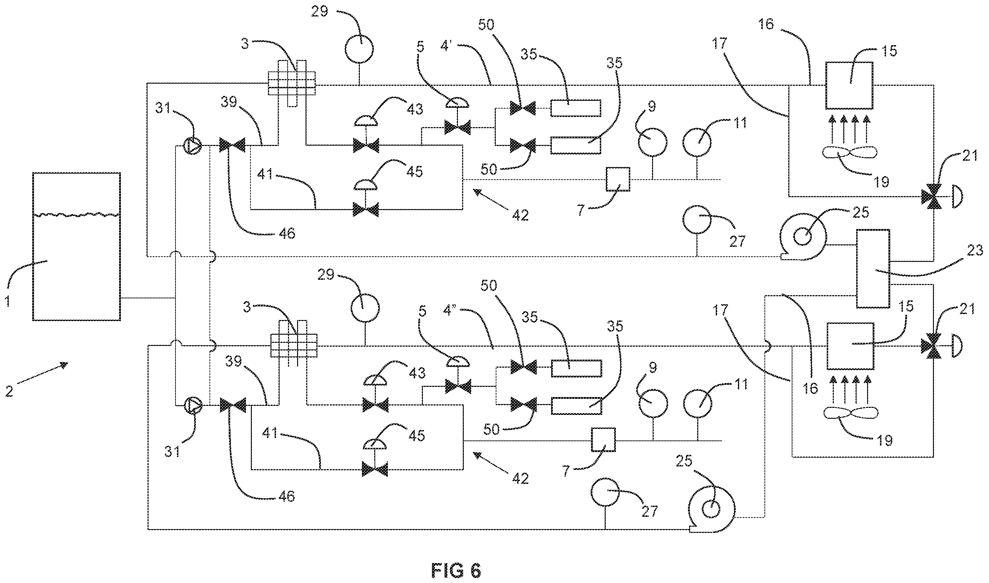

In a variant of the embodiment of FIG 5 and as best illustrated in FIG 6, the station may have two filling circuits 4', 4". This allows the liquid hydrogen from the source 1 to be supplied to either of the liquid hydrogen pumps 31 and compressed liquid hydrogen may be supplied to either of the two filling circuits 4', 4" from either liquid hydrogen pump. Although not illustrated, a single set of buffer containers 35 may be shared in common with each of the filling circuits 4', 4" allows the size of the buffer containers to be optimized, thereby decreasing capital costs.

In each of the foregoing embodiments, it should be noted that the downstream end may be equipped with at least two nozzles. Each of the nozzles is adapted and configured to be removably connected with the tank of a FCEV for filling of the tank with. While any known configuration of nozzle may be used, typically the nozzle is part of a hydrogen dispenser available from Tatsuno Corporation for use in retail hydrogen refilling stations.

Regardless of the particular embodiment, while the refilling station may be located anywhere FCEV tanks need refilling, it is of particular usefulness when located at a retail fuel station fitted with hydrogen dispensers for use by drivers of FCEVs who do not necessarily have any training in the handling and dispensing of high pressure hydrogen. In a preferred filling sequence, after the nozzle is connected in gas-tight fashion with the FCEV tank, gaseous hydrogen is first fed from the lowest pressure buffer container (that is at a pressure higher than that of the hydrogen in the tank) and into the tank in order to decrease the impact of the Joule-Thomson effect. The particular manner in which the filling is performed is dictated by the filling algorithm, such as one compliant with the SAE J2601 standard. Control of the pressure of the gaseous hydrogen from the nozzle is done with a pressure control valve based upon the pressure of the gaseous hydrogen by a pressure sensor in the nozzle or in the tank. When the lower pressure buffer container and the tank are essentially pressure-equalized, gaseous hydrogen is instead dispensed from a higher pressure buffer container and into the tank. This is continued until completion of the fill, according to the algorithm, is indicated. Before another FCEV tank is filled, the liquid hydrogen is pumped from the source to the first heat exchanger and the result pressurized gaseous hydrogen is used to refill the buffer containers.

The invention provides several advantages.

The vaporizer used in the invention need not be very tall. Indeed, it can remain under 10' (3,05m) in height. This is important because, in urban locations, the presence of overhead power lines, telephone lines, or trees restricts the vertical space that may be taken up by conventional ambient air vaporizers. In contrast to the vaporizer used in the invention, conventional ambient air vaporizers often exceed 10' in height.

In comparison to ambient air vaporizers, the vaporizer used in the invention allows more precise control of the outlet temperature of the hydrogen at the dispenser that is necessary for meeting stringent temperature control profiles required by many hydrogen filling protocols, such as the SAE J2601. Because conventional ambient air vaporizers exchange heat with liquefied cryogenic gases in a largely passive manner, the temperature of the vaporized cryogen will highly depend upon the ambient temperature. In the invention, the temperature of the heat transfer fluid exiting the second heat exchanger may be precisely controlled through precise control of the blower speed or the electrical power supplied to a heater. This in turn allows more precise control of the vaporized hydrogen exiting the first heat exchanger after exchanging heat with the temperature-controlled heat transfer fluid.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations that fall within the scope of the appended claims.

## Claims

1. A hydrogen refilling station, comprising a liquid hydrogen source (1) adapted and configured to store liquid hydrogen, a filling circuit (2), and a heat transfer fluid circuit (4), wherein
the filling circuit (2) has an upstream end in downstream fluid communication with the liquid hydrogen source (1) to allow a flow of liquid hydrogen from the source (1) into the filling circuit (2), a downstream end adapted and configured to be removably connected with a hydrogen-fuelled vehicle tank (6) for filling of the tank with, and a first heat exchanger (3) disposed between the upstream and downstream ends of the filling circuit (2);
the heat transfer circuit (4) comprises, in flow order, an upstream end in downstream flow communication with the first heat exchanger (3), a second heat exchanger (15), a heat transfer fluid pump (25), and a downstream end in upstream flow communication with the first heat exchanger (3), the heat transfer fluid pump (25) being adapted and configured to receive a heat transfer fluid from the second heat exchanger (25) and direct it to the first heat exchanger (3), the heat transfer fluid being in liquid phase at nominal pressures down to at least -135°C;
the second heat exchanger (15) is adapted and configured to warm cooled heat transfer fluid received from the first heat exchanger (3); and
the first heat exchanger (3) is adapted and configured to exchange heat between the heat transfer fluid flowing through the heat transfer circuit (4) and liquid hydrogen in the filling circuit (2) so as to cool the heat transfer fluid and vaporize the liquid hydrogen to provide the pressurized, gaseous hydrogen for filling the tank (6), the flow of liquid hydrogen inside the first heat exchanger (3) being surrounded by the flow of the heat transfer fluid.

2. The station of claim 1, further comprising a liquid hydrogen pump (31) in downstream flow communication with the liquid hydrogen source (1) and upstream flow communication with the first heat exchanger (3) that is adapted and configured to increase a pressure of the flow of liquid hydrogen from the liquid hydrogen source (1) and direct the pressurized flow of liquid hydrogen towards the first heat exchanger (3).

3. The station according to claims 1 or 2, wherein the filling circuit (2) further comprises a pressure control valve (5) and a pressure sensor (9) downstream of the first exchanger (3) and the pressure control valve (5) is adapted and configured to control a pressure of the pressurized, gaseous hydrogen for filling the tank (6) based upon a pressure of the pressurized, gaseous hydrogen measured by the pressure sensor (9).

4. The station according to any of the preceding claims, wherein:
the heat transfer circuit (4) further comprises a primary line (16), a bypass line (17), a three-way flow control valve (21), a temperature sensor (27), and a downstream line in flow communication between the three-way flow control valve (21) and the heat transfer fluid pump (25);
the primary line (16) extends in flow communication between the first heat exchanger (3) and the three-way flow control valve (21);
the bypass line (17) branches off of the primary line (16) and is in upstream flow communication with the three-way flow control valve (21);
the second heat exchanger (15) is disposed in the primary line (16);
the three-way flow control valve (21) controls flows of warmed heat transfer fluid from the primary line (16) and non-warmed heat transfer fluid from the bypass line (17), combines the flow of the warmed heat transfer fluid from the primary line (16) and the flow of the non-warmed heat transfer fluid from the bypass line (17), and directs the combined flow of heat transfer fluid to the heat transfer pump (25);
the temperature sensor (27) is disposed in the heat transfer circuit (4) in between the three-way flow control valve (21) and the first heat exchanger (3); and
the three-way control valve (21) controls a temperature of the heat transfer fluid in between the three-way control valve (21) and the first heat exchanger (3) by adjusting a ratio of the flow rate of the warmed heat transfer fluid to the flow rate of the non-warmed heat transfer fluid in the combined flow of heat transfer fluid.

5. The station according to any of the preceding claims, wherein the heat transfer circuit (4) further comprises a blower (19) that is adapted and configured to blow ambient air at the second heat exchanger (15) so as to warm the heat transfer fluid with the heat of the blown ambient air.

6. The station according to any of the preceding claims, wherein the second heat exchanger (15) is an electric heater adapted and configured to warm the heat transfer fluid.

7. The station according to any of the preceding claims, further comprising two or more buffer containers (35), a leg branching off of the filling circuit (2) downstream of the first heat exchanger (3) that is adapted and configured to direct the pressurized, gaseous hydrogen from the first heat exchanger (3) to the two or more buffer containers (35), a set of valves (50), and a pressure control valve, the set of valves (50) being adapted and configured to allow the pressurized, gaseous hydrogen to flow through the leg and into one of the buffer containers (35) but not into other of the buffer containers (35) and allow the pressurized, gaseous hydrogen to flow from one of the buffer containers (35) through the leg and to the downstream end of the filling circuit (2), the pressure control valve being adapted and configured to control a pressure of the pressurized, gaseous hydrogen flowing out of the downstream end of the filling circuit (2) based upon a pressure sensed by a pressure sensor disposed in the filling circuit (2) between the leg and the downstream end of the filling circuit (2).

8. The station according to any of the preceding claims, wherein the filling circuit (2) further comprises a primary line (39) in fluid communication between the upstream and downstream ends of the filling circuit (2), a bypass line (41) that branches off from the primary line (39) and recombines with the primary line (39) downstream of the first heat exchanger (3), a flow control valve (43) disposed in the primary line (39), a flow control valve (45) disposed in the bypass line (41), and a temperature sensor (11) disposed in the filling circuit (2) downstream of a point where the bypass line (41) recombines with the primary line (39) and upstream of the downstream end of the filling circuit (2), the first heat exchanger (3) being disposed in the primary line (39), the flow control valve (43) disposed in the primary line (39) being adapted and configured to control a flow of vaporized hydrogen flowing through the primary line (39), the flow control valve (45) disposed in the bypass lines (41) being adapted and configured to control a flow of liquid hydrogen flowing through the bypass line (41), the flow control valves (43, 45) controlling the flows of vaporized hydrogen and liquid hydrogen to in turn control a temperature of the pressurized, gaseous hydrogen for filling the tank (6) that is based upon a temperature sensed by the temperature sensor (11).

9. The station according to any of the preceding claims, wherein the heat transfer circuit (4) further comprises a heat transfer reservoir (23) in fluid communication between the second heat exchanger (15) and the heat transfer pump (25), the heat transfer reservoir (23) being adapted and configured to contain a volume of the heat transfer fluid.

10. A method of filling a tank (6) of a fuel cell electric vehicle with pressurized hydrogen, comprising the steps of:
feeding liquid hydrogen from a source (1) of liquid hydrogen to a filling circuit (2) whose downstream end is removably connected to the tank (6), the filling circuit (2) having a first heat exchanger (3) disposed therein, the first heat exchanger (3) having a liquid hydrogen inlet, a gaseous hydrogen outlet, a heat transfer fluid inlet, and a heat transfer fluid outlet;
pumping a heat transfer fluid with a heat transfer pump (25) through a heat transfer circuit (4) looping from and to the first heat exchanger (3), the heat transfer fluid being in liquid phase at nominal pressures down to at least -135°C, the heat transfer circuit (4) comprising, in flow order from the heat transfer fluid outlet to the heat transfer fluid inlet, a second heat exchanger (15) and the heat transfer fluid pump (25);
exchanging heat, with the first heat exchanger (3), between the heat transfer fluid flowing through the heat transfer fluid circuit (4) and the liquid hydrogen fed to the filling circuit (2) from the source (1), thereby vaporizing the fed liquid hydrogen and cooling the heat transfer fluid, wherein the fed liquid hydrogen inside the first heat exchanger (3) is surrounded by the heat transfer fluid;
heating, with the second heat exchanger (15), the cooled heat transfer fluid received from the first heat exchanger (3); and
filling the tank (6) of a hydrogen-fuelled vehicle with pressurized, gaseous hydrogen from the downstream end of the filling circuit (2).

11. The method of claim 10, further comprising the step of pumping the liquid hydrogen, with a liquid hydrogen pump (31), from the source (1) into the filling circuit (2).

12. The method of claims 10 or 11, further comprising the steps of:
measuring a pressure of the pressurized, gaseous hydrogen in the filling circuit (2) downstream of the first heat exchanger (3) with a pressure sensor (9); and
controlling a pressure of the pressurized, gaseous hydrogen with a pressure control valve (5) based upon the pressure of the pressurized, gaseous hydrogen measured by the pressure sensor (9).

13. The method according to any of claims 10 to 12, wherein:
the heat transfer circuit (4) further comprises a primary line (16), a bypass line (17), a three-way flow control valve (21), a temperature sensor (27), and a downstream line in flow communication between the three-way flow control valve (21) and the heat transfer fluid pump (25);
the primary line (16) extends in flow communication between the first heat exchanger (3) and the three-way flow control valve (21);
the bypass line (17) branches off of the primary line (16) and is in upstream flow communication with the three-way flow control valve (21);
the second heat exchanger (15) is disposed in the primary line (16);
the three-way flow control valve (21) controls flows of warmed heat transfer fluid from the primary line (16) and non-warmed heat transfer fluid from the bypass line (17), combines the flow of the warmed heat transfer fluid from the primary line (16) and the flow of the non-warmed heat transfer fluid from the bypass line (17), and directs the combined flow of heat transfer fluid to the heat transfer pump (25);
the temperature sensor (27) is disposed in the heat transfer circuit (4) in between the three-way flow control valve (21) and the first heat exchanger (3); and
the three-way control valve (21) controls a temperature of the heat transfer fluid in between the three-way control valve (21) and the first heat exchanger (3) by adjusting a ratio of the flow rate of the warmed heat transfer fluid to the flow rate of the non-warmed heat transfer fluid in the combined flow of heat transfer fluid.

14. The method according to any of claims 10 to 13 , wherein the heat transfer circuit (4) further comprises a blower (19) that is adapted and configured to blow ambient air at the second heat exchanger (15) so as to warm the heat transfer fluid with the heat of the blown ambient air.

15. The method according to any of claims 10 to 14, wherein the second heat exchanger (15) is an electric heater adapted and configured to warm the heat transfer fluid.

## Patentansprüche

1. Wasserstoffbefüllungsstation, umfassend eine Flüssigwasserstoffquelle (1), die dazu angepasst und ausgelegt ist, Flüssigwasserstoff zu speichern, einen Befüllungskreislauf (2) und einen Wärmeübertragungsfluidkreislauf (4), wobei
der Befüllungskreislauf (2) ein stromaufwärtiges Ende in stromabwärtiger Fluidverbindung mit der Flüssigwasserstoffquelle (1) aufweist, um einen Fluss von Flüssigwasserstoff aus der Quelle (1) in den Befüllungskreislauf (2) zu ermöglichen, ein stromabwärtiges Ende, das dazu angepasst und ausgelegt ist, lösbar mit einem Tank (6) eines wasserstoffbetriebenen Fahrzeugs zum Befüllen des Tanks verbunden zu werden, und einen ersten Wärmetauscher (3), der zwischen dem stromaufwärtigen und dem stromabwärtigen Ende des Befüllungskreislaufs (2) angeordnet ist;
der Wärmeübertragungskreislauf (4) in Strömungsrichtung ein stromaufwärtiges Ende in stromabwärtiger Strömungsverbindung mit dem ersten Wärmetauscher (3), einen zweiten Wärmetauscher (15), eine Wärmeübertragungsfluidpumpe (25) und ein stromabwärtiges Ende in stromaufwärtiger Strömungsverbindung mit dem ersten Wärmetauscher (3) umfasst, wobei die Wärmeübertragungsfluidpumpe (25) dazu angepasst und ausgelegt ist, ein Wärmeübertragungsfluid aus dem zweiten Wärmetauscher (25) zu empfangen und zum ersten Wärmetauscher (3) zu leiten, wobei das Wärmeübertragungsfluid bei Nenndrücken bis mindestens - 135°C in flüssiger Phase vorliegt;
der zweite Wärmetauscher (15) dazu angepasst und ausgelegt ist, gekühltes Wärmeübertragungsfluid, das aus dem ersten Wärmetauscher (3) empfangen wird, zu erwärmen; und
der erste Wärmetauscher (3) dazu angepasst und ausgelegt ist, Wärme zwischen dem durch den Wärmeübertragungskreislauf (4) strömenden Wärmeübertragungsfluid und dem Flüssigwasserstoff im Befüllungskreislauf (2) auszutauschen, um das Wärmeübertragungsfluid zu kühlen und den Flüssigwasserstoff zu verdampfen, um den unter Druck stehenden, gasförmigen Wasserstoff zum Befüllen des Tanks (6) bereitzustellen, wobei der Fluss des Flüssigwasserstoffs innerhalb des ersten Wärmetauschers (3) vom Fluss des Wärmeübertragungsfluids umgeben ist.

2. Station nach Anspruch 1, ferner umfassend eine Flüssigwasserstoffpumpe (31) in stromabwärtiger Strömungsverbindung mit der Flüssigwasserstoffquelle (1) und stromaufwärtiger Strömungsverbindung mit dem ersten Wärmetauscher (3), die dazu angepasst und ausgelegt ist, einen Druck des Flüssigwasserstoffstroms aus der Flüssigwasserstoffquelle (1) zu erhöhen und den unter Druck stehenden Flüssigwasserstoffstrom zum ersten Wärmetauscher (3) zu leiten.

3. Station nach den Ansprüchen 1 oder 2, wobei der Befüllungskreislauf (2) ferner ein Druckregelventil (5) und einen Drucksensor (9) stromabwärts des ersten Wärmetauschers (3) umfasst und das Druckregelventil (5) dazu angepasst und ausgelegt ist, einen Druck des unter Druck stehenden, gasförmigen Wasserstoffs zum Befüllen des Tanks (6) basierend auf einem durch den Drucksensor (9) gemessenen Druck des unter Druck stehenden, gasförmigen Wasserstoffs zu regeln.

4. Station nach einem der vorhergehenden Ansprüche, wobei:
der Wärmeübertragungskreislauf (4) ferner eine Hauptleitung (16), eine Bypassleitung (17), ein Dreiwegeströmungsregelventil (21), einen Temperatursensor (27) und eine stromabwärtige Leitung in Strömungsverbindung zwischen dem Dreiwegeströmungsregelventil (21) und der Wärmeübertragungsfluidpumpe (25) umfasst;
die Hauptleitung (16) sich in Strömungsverbindung zwischen dem ersten Wärmetauscher (3) und dem Dreiwegeströmungsregelventil (21) erstreckt;
die Bypassleitung (17) von der Hauptleitung (16) abzweigt und in stromaufwärtiger Strömungsverbindung mit dem Dreiwegeströmungsregelventil (21) steht;
der zweite Wärmetauscher (15) in der Hauptleitung (16) angeordnet ist;
das Dreiwegeströmungsregelventil (21) Ströme von erwärmtem Wärmeübertragungsfluid aus der Hauptleitung (16) und nicht erwärmtem Wärmeübertragungsfluid aus der Bypassleitung (17) regelt, den Strom des erwärmten Wärmeübertragungsfluids aus der Hauptleitung (16) und den Strom des nicht erwärmten Wärmeübertragungsfluids aus der Bypassleitung (17) kombiniert und den kombinierten Strom von Wärmeübertragungsfluid zur Wärmeübertragungspumpe (25) leitet;
der Temperatursensor (27) im Wärmeübertragungskreislauf (4) zwischen dem Dreiwegeströmungsregelventil (21) und dem ersten Wärmetauscher (3) angeordnet ist; und
das Dreiwegeströmungsregelventil (21) eine Temperatur des Wärmeübertragungsfluids zwischen dem Dreiwegeströmungsregelventil (21) und dem ersten Wärmetauscher (3) durch Anpassen eines Verhältnisses der Strömungsrate des erwärmten Wärmeübertragungsfluids zur Strömungsrate des nicht erwärmten Wärmeübertragungsfluids im kombinierten Strom von Wärmeübertragungsfluid regelt.

5. Station nach einem der vorhergehenden Ansprüche, wobei der Wärmeübertragungskreislauf (4) ferner ein Gebläse (19) umfasst, das dazu angepasst und ausgelegt ist, Umgebungsluft auf den zweiten Wärmetauscher (15) zu blasen, um das Wärmeübertragungsfluid mit der Wärme der geblasenen Umgebungsluft zu erwärmen.

6. Station nach einem der vorhergehenden Ansprüche, wobei der zweite Wärmetauscher (15) eine elektrische Heizung ist, die dazu angepasst und ausgelegt ist, das Wärmeübertragungsfluid zu erwärmen.

7. Station nach einem der vorhergehenden Ansprüche, ferner umfassend zwei oder mehr Pufferbehälter (35), einen vom Befüllungskreislauf (2) stromabwärts des ersten Wärmetauschers (3) abzweigenden Schenkel, der dazu angepasst und ausgelegt ist, den unter Druck stehenden, gasförmigen Wasserstoff vom ersten Wärmetauscher (3) zu den zwei oder mehr Pufferbehältern (35) zu leiten, einen Satz von Ventilen (50) und ein Druckregelventil, wobei der Satz von Ventilen (50) dazu angepasst und ausgelegt ist, dem unter Druck stehenden, gasförmigen Wasserstoff zu ermöglichen, durch den Schenkel und in einen der Pufferbehälter (35), aber nicht in andere der Pufferbehälter (35) zu strömen, und dem unter Druck stehenden, gasförmigen Wasserstoff zu ermöglichen, aus einem der Pufferbehälter (35) durch den Schenkel und zum stromabwärtigen Ende des Befüllungskreislaufs (2) zu strömen, wobei das Druckregelventil dazu angepasst und ausgelegt ist, einen Druck des aus dem stromabwärtigen Ende des Befüllungskreislaufs (2) strömenden, unter Druck stehenden, gasförmigen Wasserstoffs basierend auf einem durch einen im Befüllungskreislauf (2) zwischen dem Schenkel und dem stromabwärtigen Ende des Befüllungskreislaufs (2) angeordneten Drucksensor erfassten Druck zu regeln.

8. Station nach einem der vorhergehenden Ansprüche, wobei der Befüllungskreislauf (2) ferner eine Hauptleitung (39) in Fluidverbindung zwischen dem stromaufwärtigen und dem stromabwärtigen Ende des Befüllungskreislaufs (2), eine Bypassleitung (41), die von der Hauptleitung (39) abzweigt und stromabwärts des ersten Wärmetauschers (3) wieder mit der Hauptleitung (39) zusammenläuft, ein in der Hauptleitung (39) angeordnetes Strömungsregelventil (43), ein in der Bypassleitung (41) angeordnetes Strömungsregelventil (45) und einen im Befüllungskreislauf (2) stromabwärts einer Stelle, an der die Bypassleitung (41) wieder mit der Hauptleitung (39) zusammenläuft, und stromaufwärts des stromabwärtigen Endes des Befüllungskreislaufs (2) angeordneten Temperatursensor (11) umfasst, wobei der erste Wärmetauscher (3) in der Hauptleitung (39) angeordnet ist, das in der Hauptleitung (39) angeordnete Strömungsregelventil (43) dazu angepasst und ausgelegt ist, einen durch die Hauptleitung (39) strömenden Fluss von verdampftem Wasserstoff zu regeln, das in der Bypassleitung (41) angeordnete Strömungsregelventil (45) dazu angepasst und ausgelegt ist, einen durch die Bypassleitung (41) strömenden Fluss von Flüssigwasserstoff zu regeln, wobei die Strömungsregelventile (43, 45) die Ströme von verdampftem Wasserstoff und Flüssigwasserstoff regeln, um wiederum eine Temperatur des unter Druck stehenden, gasförmigen Wasserstoffs zum Befüllen des Tanks (6) zu regeln, die auf einer durch den Temperatursensor (11) erfassten Temperatur basiert.

9. Station nach einem der vorhergehenden Ansprüche, wobei der Wärmeübertragungskreislauf (4) ferner einen Wärmeübertragungsbehälter (23) in Fluidverbindung zwischen dem zweiten Wärmetauscher (15) und der Wärmeübertragungspumpe (25) umfasst, wobei der Wärmeübertragungsbehälter (23) dazu angepasst und ausgelegt ist, ein Volumen des Wärmeübertragungsfluids zu enthalten.

10. Verfahren zum Befüllen eines Tanks (6) eines Brennstoffzellenelektrofahrzeugs mit unter Druck stehendem Wasserstoff, umfassend die Schritte:
Zuführen von Flüssigwasserstoff aus einer Quelle (1) von Flüssigwasserstoff zu einem Befüllungskreislauf (2), dessen stromabwärtiges Ende lösbar mit dem Tank (6) verbunden ist, wobei der Befüllungskreislauf (2) einen darin angeordneten ersten Wärmetauscher (3) aufweist, wobei der erste Wärmetauscher (3) einen Flüssigwasserstoffeinlass, einen Gaswasserstoffauslass, einen Wärmeübertragungsfluideinlass und einen Wärmeübertragungsfluidauslass aufweist;
Pumpen eines Wärmeübertragungsfluids mit einer Wärmeübertragungsfluidpumpe (25) durch einen Wärmeübertragungskreislauf (4), der vom und zum ersten Wärmetauscher (3) verläuft, wobei das Wärmeübertragungsfluid bei Nenndrücken bis mindestens - 135°C in flüssiger Phase vorliegt, wobei der Wärmeübertragungskreislauf (4) in Strömungsrichtung vom Wärmeübertragungsfluidauslass zum Wärmeübertragungsfluideinlass einen zweiten Wärmetauscher (15) und die Wärmeübertragungsfluidpumpe (25) umfasst;
Austauschen von Wärme mit dem ersten Wärmetauscher (3) zwischen dem durch den Wärmeübertragungsfluidkreislauf (4) strömenden Wärmeübertragungsfluid und dem aus der Quelle (1) dem Befüllungskreislauf (2) zugeführten Flüssigwasserstoff, wodurch der zugeführte Flüssigwasserstoff verdampft und das Wärmeübertragungsfluid gekühlt wird, wobei der zugeführte Flüssigwasserstoff innerhalb des ersten Wärmetauschers (3) vom Wärmeübertragungsfluid umgeben ist;
Erwärmen des aus dem ersten Wärmetauscher (3) empfangenen gekühlten Wärmeübertragungsfluids mit dem zweiten Wärmetauscher (15); und
Befüllen des Tanks (6) eines wasserstoffbetriebenen Fahrzeugs mit unter Druck stehendem, gasförmigem Wasserstoff aus dem stromabwärtigen Ende des Befüllungskreislaufs (2).

11. Verfahren nach Anspruch 10, ferner umfassend den Schritt des Pumpens des Flüssigwasserstoffs mit einer Flüssigwasserstoffpumpe (31) aus der Quelle (1) in den Befüllungskreislauf (2).

12. Verfahren nach Anspruch 10 oder 11, ferner umfassend die Schritte:
Messen eines Drucks des unter Druck stehenden, gasförmigen Wasserstoffs im Befüllungskreislauf (2) stromabwärts des ersten Wärmetauschers (3) mit einem Drucksensor (9); und
Regeln eines Drucks des unter Druck stehenden, gasförmigen Wasserstoffs mit einem Druckregelventil (5) basierend auf dem durch den Drucksensor (9) gemessenen Druck des unter Druck stehenden, gasförmigen Wasserstoffs.

13. Verfahren nach einem der Ansprüche 10 bis 12, wobei:
der Wärmeübertragungskreislauf (4) ferner eine Hauptleitung (16), eine Bypassleitung (17), ein Dreiwegeströmungsregelventil (21), einen Temperatursensor (27) und eine stromabwärtige Leitung in Strömungsverbindung zwischen dem Dreiwegeströmungsregelventil (21) und der Wärmeübertragungsfluidpumpe (25) umfasst;
die Hauptleitung (16) sich in Strömungsverbindung zwischen dem ersten Wärmetauscher (3) und dem Dreiwegeströmungsregelventil (21) erstreckt;
die Bypassleitung (17) von der Hauptleitung (16) abzweigt und in stromaufwärtiger Strömungsverbindung mit dem Dreiwegeströmungsregelventil (21) steht;
der zweite Wärmetauscher (15) in der Hauptleitung (16) angeordnet ist;
das Dreiwegeströmungsregelventil (21) Ströme von erwärmtem Wärmeübertragungsfluid aus der Hauptleitung (16) und nicht erwärmtem Wärmeübertragungsfluid aus der Bypassleitung (17) regelt, den Strom des erwärmten Wärmeübertragungsfluids aus der Hauptleitung (16) und den Strom des nicht erwärmten Wärmeübertragungsfluids aus der Bypassleitung (17) kombiniert und den kombinierten Strom von Wärmeübertragungsfluid zur Wärmeübertragungspumpe (25) leitet;
der Temperatursensor (27) im Wärmeübertragungskreislauf (4) zwischen dem Dreiwegeströmungsregelventil (21) und dem ersten Wärmetauscher (3) angeordnet ist; und
das Dreiwegeströmungsregelventil (21) eine Temperatur des Wärmeübertragungsfluids zwischen dem Dreiwegeströmungsregelventil (21) und dem ersten Wärmetauscher (3) durch Anpassen eines Verhältnisses der Strömungsrate des erwärmten Wärmeübertragungsfluids zur Strömungsrate des nicht erwärmten Wärmeübertragungsfluids im kombinierten Strom von Wärmeübertragungsfluid regelt.

14. Verfahren nach einem der Ansprüche 10 bis 13, wobei der Wärmeübertragungskreislauf (4) ferner ein Gebläse (19) umfasst, das dazu angepasst und ausgelegt ist, Umgebungsluft auf den zweiten Wärmetauscher (15) zu blasen, um das Wärmeübertragungsfluid mit der Wärme der geblasenen Umgebungsluft zu erwärmen.

15. Verfahren nach einem der Ansprüche 10 bis 14, wobei der zweite Wärmetauscher (15) eine elektrische Heizung ist, die dazu angepasst und ausgelegt ist, das Wärmeübertragungsfluid zu erwärmen.

## Revendications

1. Station de remplissage d'hydrogène, comprenant une source d'hydrogène liquide (1) conçue et configurée pour stocker de l'hydrogène liquide, un circuit de remplissage (2) et un circuit de fluide caloporteur (4),
le circuit de remplissage (2) comportant une extrémité amont en communication fluidique aval avec la source d'hydrogène liquide (1) pour permettre un écoulement d'hydrogène liquide de la source (1) dans le circuit de remplissage (2), une extrémité aval conçue et configurée pour être raccordée de manière amovible à un réservoir de véhicule alimenté à l'hydrogène (6) pour le remplissage du réservoir, et un premier échangeur de chaleur (3) disposé entre les extrémités amont et aval du circuit de remplissage (2) ;
le circuit de transfert de chaleur (4) comprenant, dans l'ordre d'écoulement, une extrémité amont en communication fluidique aval avec le premier échangeur de chaleur (3), un second échangeur de chaleur (15), une pompe à fluide caloporteur (25), et une extrémité aval en communication fluidique amont avec le premier échangeur de chaleur (3), la pompe à fluide caloporteur (25) étant conçue et configurée pour recevoir un fluide caloporteur provenant du second échangeur de chaleur (25) et le diriger vers le premier échangeur de chaleur (3), le fluide caloporteur étant en phase liquide à des pressions nominales allant jusqu'à au moins -135 C;
le second échangeur de chaleur (15) étant conçu et configuré pour chauffer le fluide caloporteur refroidi reçu du premier échangeur de chaleur (3) ; et
le premier échangeur de chaleur (3) étant conçu et configuré pour échanger de la chaleur entre le fluide caloporteur circulant dans le circuit de transfert de chaleur (4) et l'hydrogène liquide dans le circuit de remplissage (2) de sorte à refroidir le fluide caloporteur et à vaporiser l'hydrogène liquide afin de fournir de l'hydrogène gazeux sous pression pour remplir le réservoir (6), le flux d'hydrogène liquide à l'intérieur du premier échangeur de chaleur (3) étant entouré par le flux du fluide caloporteur.

2. Station selon la revendication 1, comprenant en outre une pompe à hydrogène liquide (31) en communication fluidique aval avec la source d'hydrogène liquide (1) et en communication fluidique amont avec le premier échangeur de chaleur (3), qui est conçue et configurée pour augmenter la pression du flux d'hydrogène liquide provenant de la source d'hydrogène liquide (1) et diriger le flux sous pression d'hydrogène liquide vers le premier échangeur de chaleur (3).

3. Station selon la revendication 1 ou 2, le circuit de remplissage (2) comprenant en outre une vanne de régulation de pression (5) et un capteur de pression (9) en aval du premier échangeur (3) et la vanne de régulation de pression (5) étant conçue et configurée pour réguler une pression de l'hydrogène gazeux sous pression pour remplir le réservoir (6) en fonction d'une pression de l'hydrogène gazeux pressurisé mesurée par le capteur de pression (9).

4. Station selon l'une quelconque des revendications précédentes dans laquelle:
le circuit de transfert de chaleur (4) comprenant en outre une conduite primaire (16), une conduite de dérivation (17), une vanne de régulation de débit à trois voies (21), un capteur de température (27) et une conduite en aval en communication fluidique entre la vanne de régulation de débit à trois voies (21) et la pompe à fluide caloporteur (25) ;
la conduite primaire (16) s'étendant en communication fluidique entre le premier échangeur de chaleur (3) et la vanne de régulation de débit à trois voies (21) ;
la conduite de dérivation (17) partant de la conduite primaire (16) et étant en communication fluidique amont avec la valve de régulation de débit à trois voies (21) ; le second échangeur de chaleur (15) étant disposé dans la conduite primaire (16) ;
la vanne de régulation de débit à trois voies (21) régulant les flux de fluide caloporteur chauffé provenant de la conduite primaire (16) et de fluide caloporteur non chauffé provenant de la conduite de dérivation (17), combinant le flux de fluide caloporteur chauffé provenant de la conduite primaire (16) et le flux de fluide caloporteur non chauffé provenant de la conduite de dérivation (17), et dirigeant le flux combiné de fluide caloporteur vers la pompe de transfert de chaleur (25) ; le capteur de température (27) étant disposé dans le circuit de transfert de chaleur (4) entre le régulateur de débit à trois voies (21) et le premier échangeur de chaleur (3) ; et
la vanne de régulation à trois voies (21) régulant la température du fluide caloporteur entre la vanne de régulation à trois voies (21) et le premier échangeur de chaleur (3) en ajustant le rapport entre le débit du fluide caloporteur chauffé et le débit du fluide caloporteur non chauffé dans le flux combiné de fluide caloporteur.

5. Station selon l'une quelconque des revendications précédentes, dans laquelle le circuit de transfert de chaleur (4) comprend en outre un ventilateur (19) qui est conçu et configuré pour souffler de l'air ambiant au niveau du second échangeur de chaleur (15) de sorte à chauffer le fluide de transfert de chaleur avec la chaleur de l'air ambiant soufflé.

6. Station selon l'une quelconque des revendications précédentes, dans laquelle le second échangeur de chaleur (15) est un radiateur électrique conçu et configuré pour chauffer le fluide caloporteur.

7. Station selon l'une quelconque des revendications précédentes, comprenant en outre deux réservoirs tampons (35) ou plus, une branche partant du circuit de remplissage (2) en aval du premier échangeur de chaleur (3) qui est conçue et configurée pour diriger l'hydrogène gazeux sous pression du premier échangeur de chaleur (3) vers les deux réservoirs tampons (35) ou plus, un ensemble de vannes (50), et une vanne de régulation de pression, l'ensemble de vannes (50) étant conçu et configuré pour permettre à l'hydrogène gazeux sous pression de s'écouler à travers la branche et dans l'un des réservoirs tampons (35) mais pas dans les autres réservoirs tampons (35), et pour permettre à l'hydrogène gazeux sous pression de s'écouler de l'un des réservoirs tampons (35) à travers la branche et jusqu'à l'extrémité en aval du circuit de remplissage (2), la vanne de régulation de pression étant conçue et configurée pour réguler la pression de l'hydrogène gazeux sous pression s'écoulant hors de l'extrémité aval du circuit de remplissage (2) en fonction d'une pression détectée par un capteur de pression disposé dans le circuit de remplissage (2) entre la branche et l'extrémité aval du circuit de remplissage (2).

8. Station selon l'une quelconque des revendications précédentes, dans laquelle le circuit de remplissage (2) comprenant en outre une conduite primaire (39) en communication fluidique entre les extrémités amont et aval du circuit de remplissage (2), une conduite de dérivation (41) qui part de la conduite primaire (39) et rejoint la conduite primaire (39) en aval du premier échangeur de chaleur (3), une vanne de régulation de débit (43) disposée dans la conduite primaire (39), une vanne de régulation de débit (45) disposée dans la conduite de dérivation (41), et un capteur de température (11) disposé dans le circuit de remplissage (2) en aval d'un point où la conduite de dérivation (41) rejoint la conduite primaire (39) et en amont de l'extrémité aval du circuit de remplissage (2), le premier échangeur de chaleur (3) étant disposé dans la conduite primaire (39), la vanne de régulation de débit (43) disposée dans la conduite primaire (39) étant conçue et configurée pour réguler un flux d'hydrogène vaporisé s'écoulant dans la conduite primaire (39), la vanne de régulation de débit (45) disposée dans les conduites de dérivation (41) étant conçue et configurée pour réguler un flux d'hydrogène liquide s'écoulant à travers la conduite de dérivation (41), les vannes de régulation de débit (43, 45) régulant les flux d'hydrogène vaporisé et d'hydrogène liquide pour réguler à leur tour une température de l'hydrogène gazeux sous pression pour le remplissage du réservoir (6) qui est basée sur une température détectée par le capteur de température (11).

9. Station selon l'une quelconque des revendications précédentes, dans laquelle le circuit de transfert de chaleur (4) comprend en outre un réservoir de transfert de chaleur (23) en communication fluidique entre le second échangeur de chaleur (15) et la pompe de transfert de chaleur (25), le réservoir de transfert de chaleur (23) étant conçu et configuré pour contenir un volume de fluide de transfert de chaleur.

10. Procédé de remplissage d'un réservoir (6) d'un véhicule électrique à pile à combustible avec de l'hydrogène sous pression, comprenant les étapes de :
alimentation en hydrogène liquide depuis une source (1) d'hydrogène liquide vers un circuit de remplissage (2) dont l'extrémité aval est raccordée de manière amovible au réservoir (6), le circuit de remplissage (2) comportant un premier échangeur de chaleur (3) disposé en son sein, le premier échangeur de chaleur (3) comportant une entrée d'hydrogène liquide, une sortie d'hydrogène gazeux, une entrée de fluide caloporteur et une sortie de fluide caloporteur ;
pompage d'un fluide caloporteur à l'aide d'une pompe de transfert de chaleur (25) dans un circuit caloporteur (4) en boucle depuis et vers le premier échangeur de chaleur (3), le fluide caloporteur étant en phase liquide à des pressions nominales allant jusqu'à au moins -135 C, le circuit caloporteur (4) comprenant, dans l'ordre d'écoulement depuis la sortie de fluide caloporteur jusqu'à l'entrée de fluide caloporteur, un second échangeur de chaleur (15) et la pompe à fluide caloporteur (25) ;
échange de la chaleur, avec le premier échangeur de chaleur (3), entre le fluide caloporteur circulant à travers le circuit de fluide caloporteur (4) et l'hydrogène liquide alimentant le circuit de remplissage (2) à partir de la source (1), vaporisant ainsi l'hydrogène liquide alimenté et refroidissant le fluide caloporteur, l'hydrogène liquide alimenté à l'intérieur du premier échangeur de chaleur (3) étant entouré par le fluide caloporteur ;
chauffage, avec le second échangeur de chaleur (15), du fluide caloporteur refroidi reçu du premier échangeur de chaleur (3) ; et
remplissage du réservoir (6) d'un véhicule alimenté à l'hydrogène avec de l'hydrogène gazeux sous pression à partir de l'extrémité aval du circuit de remplissage (2).

11. Procédé selon la revendication 10, comprenant en outre l'étape de pompage de l'hydrogène liquide, à l'aide d'une pompe à hydrogène liquide (31), de la source (1) dans le circuit de remplissage (2).

12. Procédé selon la revendication 10 ou 11, comprenant en outre les étapes de :
mesure de la pression de l'hydrogène gazeux sous pression dans le circuit de remplissage (2) en aval du premier échangeur de chaleur (3) à l'aide d'un capteur de pression (9) ; et
régulation de la pression de l'hydrogène gazeux sous pression à l'aide d'une vanne de régulation de pression (5) en fonction de la pression de l'hydrogène gazeux sous pression mesurée par le capteur de pression (9).

13. Procédé selon l'une quelconque des revendications 10 à 12, dans lequel :
le circuit de transfert de chaleur (4) comprend en outre une conduite primaire (16), une conduite de dérivation (17), une vanne de régulation de débit à trois voies (21), un capteur de température (27) et une conduite en aval en communication fluidique entre la vanne de régulation de débit à trois voies (21) et la pompe à fluide caloporteur (25) ;
la conduite primaire (16) s'étendant en communication fluidique entre le premier échangeur de chaleur (3) et la vanne de régulation de débit à trois voies (21) ;
la conduite de dérivation (17) partant de la conduite primaire (16) et étant en communication fluidique amont avec la valve de régulation de débit à trois voies (21) ; le second échangeur de chaleur (15) étant disposé dans la conduite primaire (16) ;
la vanne de régulation de débit à trois voies (21) régulant les flux de fluide caloporteur chauffé provenant de la conduite primaire (16) et de fluide caloporteur non chauffé provenant de la conduite de dérivation (17), combinant le flux de fluide caloporteur chauffé provenant de la conduite primaire (16) et le flux de fluide caloporteur non chauffé provenant de la conduite de dérivation (17), et dirigeant le flux combiné de fluide caloporteur vers la pompe de transfert de chaleur (25) ; le capteur de température (27) étant disposé dans le circuit de transfert de chaleur (4) entre le régulateur de débit à trois voies (21) et le premier échangeur de chaleur (3) ; et
la vanne de régulation à trois voies (21) régulant la température du fluide caloporteur entre la vanne de régulation à trois voies (21) et le premier échangeur de chaleur (3) en ajustant le rapport entre le débit du fluide caloporteur chauffé et le débit du fluide caloporteur non chauffé dans le flux combiné de fluide caloporteur.

14. Procédé selon l'une quelconque des revendications 10 à 13, dans lequel le circuit de transfert de chaleur (4) comprend en outre un ventilateur (19) qui est conçu et configuré pour souffler de l'air ambiant sur le second échangeur de chaleur (15) de sorte à chauffer le fluide de transfert de chaleur avec la chaleur de l'air ambiant soufflé.

15. Procédé selon l'une quelconque des revendications 10 à 14, dans lequel le second échangeur de chaleur (15) est un radiateur électrique conçu et configuré pour chauffer le fluide caloporteur.
